# EUROPÄISCHE PATENTSCHRIFT

(11) **EP 2 044 405 B1**
(45) Veröffentlichungstag und Bekanntmachung des Hinweises auf die Patenterteilung: **18.11.2009**
(21) Anmeldenummer: 07764968.9
(22) Anmeldetag: 29.06.2007
(51) Int. Cl.: G01K 7/18

(54) **TEMPERATURMESSSENSOR UND VERFAHREN ZU DESSEN HERSTELLUNG**
TEMPERATURE SENSOR, AND METHOD FOR THE PRODUCTION THEREOF
CAPTEUR DE TEMPERATURE ET PROCEDE DE PRODUCTION ASSOCIE

(30) Priorität: 21.07.2006 DE 102006033856
(43) Veröffentlichungstag der Anmeldung: 08.04.2009
(73) Patentinhaber: Bernitz, Georg, 90441 Nürnberg (DE); Zitzmann, Heinrich, 91207 Lauf an der Pegnitz (DE)
(72) Erfinder: BERNITZ, Georg, 90441 Nuernberg (DE); ZITZMANN, Heinrich, 91207 Lauf an der Pegnitz (DE)
(74) Vertreter: Zimmermann, Tankred Klaus
(86) Internationale Anmeldenummer: PCT/EP2007/005807
(87) Internationale Veröffentlichungsnummer: WO 2008/009347

(56) Entgegenhaltungen:
- EP-A- 0 905 493
- DE-A1- 2 527 739
- DE-A1- 10 358 282
- DE-B3-102004 034 185

## Beschreibung

Die vorliegende Erfindung bezieht sich auf einen Temperaturmesssensor und auf ein Verfahren zu dessen Herstellung und hier insbesondere auf einen Temperaturmesssensor mit Anschlussflächen, welche eine gute Kontaktierung mit Anschlussdrähten erlauben.

Im Stand der Technik geht die Tendenz dazu, Bauteile und elektrische Schaltungen immer weiter zu verkleinern bzw. zu miniaturisieren, so dass beispielsweise auf einem einzigen Wafer oder Substrat eine Vielzahl von Bauteilen in hoher Dichte hergestellt werden, die anschließend zur Weiterverwendung vereinzelt werden.

Der Vorteil dieser Miniaturisierungen besteht darin, dass zum einen der durch die Bauteile eingenommene Platz in anderen Komponenten reduziert werden kann und, was ebenfalls sehr wesentlich ist, eine Vielzahl von solchen Bauteilen in einem einzelnen Substrat herstellbar sind, so dass die zur Herstellung erforderlichen Ressourcen immer optimaler ausgenutzt werden. Aus einem Substrat erhält man nunmehr eine Vielzahl von Bauteilen, so dass durch Einsatz der gleichen Menge an Material eine erhöhte Ausbeute erhalten werden kann, so dass die Gesamtkosten für jedes einzelne Bauteil sich reduzieren, im Hinblick auf das verwendete Substratmaterial entsprechend dem durch das Bauteil eingenommenen Platz.

Ein Problem, dass bei diesen fortschreitenden Miniaturisierungen angetroffen wird, besteht darin, dass im gleichen Maße, in dem der Temperaturmesssensor schrumpft auch die zur Verfügung stehenden Kontaktflächen zum Anschluss des Temperaturmesssensors kleiner werden. Beispielsweise gewährt die verfügbare Kontaktfläche bei derart miniaturisierten Temperaturmesssensoren zur Verbindung mit Anschlussdrähten oder anderen Anschlussstellen keine ausreichende mechanische Festigkeit, so dass sich eine reduzierte Anschlusszuverlässigkeit ergibt, insbesondere dann, wenn Anschlussdrähte verwendet werden.

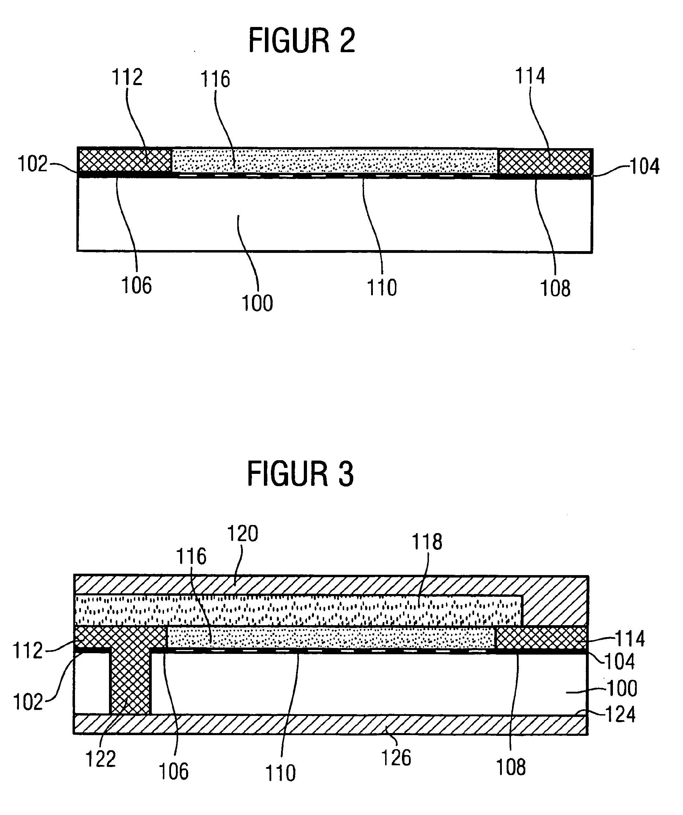

Anhand der Fig. 2 ist ein herkömmliches Bauteil näher beschrieben, welches beispielsweise ein Sensor-Chip bzw. Temperaturmesssensor ist, bei dem die Kontaktbereiche auf einer gemeinsamen Oberfläche angeordnet sind. Dieses Bauteil umfasst ein isolierendes Substrat 100, beispielsweise ein Keramiksubstrat. Auf einer oberen Oberfläche 102 des Keramiksubstrats 100 ist eine Metallschicht 104, beispielsweise ein Platinfilm gebildet. Der Sensor-Chip umfasst einen ersten Kontaktbereich 106 sowie einen zweiten Kontaktbereich 108, zwischen denen ein strukturierter Platinfilm 110, z.B. mäanderförmig, angeordnet ist. Auf den Kontaktflächen 106 und 108 sind jeweils Kontaktverstärkungen 112 und 114 aus einem leitfähigen Material angeordnet. Bei dem in Fig. 2 gezeigten Beispiel eines herkömmlichen Temperaturmesssensors ist der Messfilm 110 durch eine Glasurschicht 116 geschützt, die zwischen den Kontaktverstärkungen 112 und 114 angeordnet ist. Wie zu erkennen ist, sind die Kontaktflächen 112, 114 verglichen mit der Gesamtabmessung des Elements recht klein, und mit zunehmender Miniaturisierung des Gesamtelements reduziert sich auch hier die verfügbare Kontaktfläche zum Anschluss an Anschlussdrähte oder Ähnliches, so dass es hier zu den oben erwähnten Problemen im Zusammenhang mit der Qualität der Anschlussverbindung kommt.

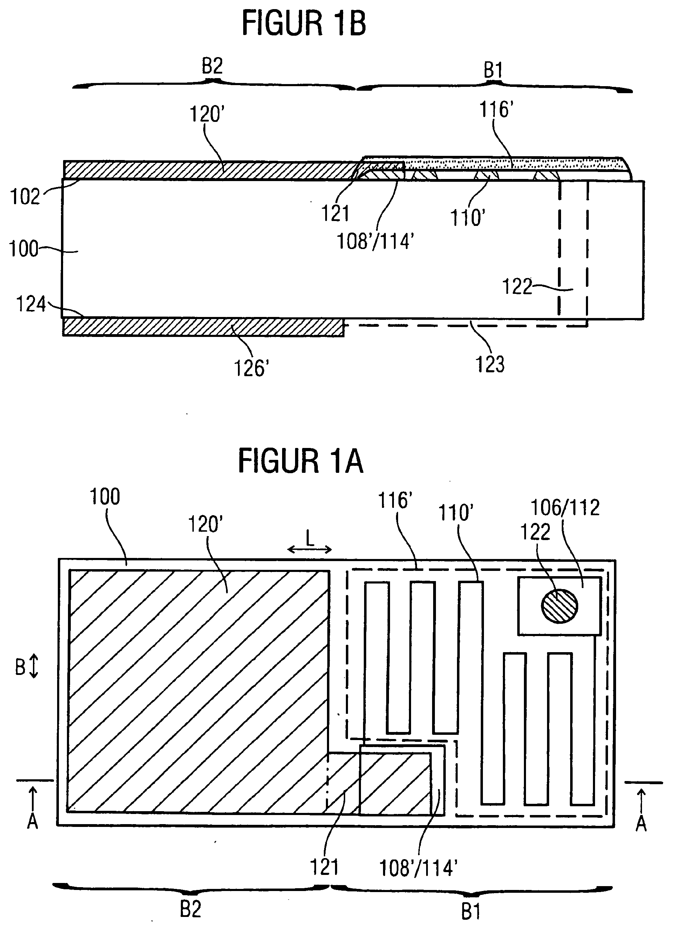

Ein Beispiel zur Lösung dieser Problematik wird in der DE 103 58 282 A1 und nachfolgend anhand von Fig. 3 erläutert, wobei hier die aus der Fig. 2 bekannten Elemente mit den gleichen Bezugszeichen versehen sind. Auf der Glasur 116 und auf der Verstärkung 112 des ersten Kontaktes 106 ist eine isolierende Schicht 118 angeordnet, die im Wesentlichen die gesamte freiliegende obere Oberfläche des in Fig. 1 gezeigten Sensorelements bedeckt, mit Ausnahme eines Teils der Verstärkung 114 der zweiten Kontaktfläche 108. Auf die so gebildete Oberfläche ist eine leitfähige Schicht 120 abgeschieden, die die isolierende Schicht 118 sowie den freiliegenden Bereich der Kontaktverstärkung 114 des zweiten Kontakts 108 bedeckt. Ferner ist in dem Substrat 100 eine Durchkontaktierung 122 gebildet, beispielsweise durch einen mit einem leitfähigen Material gefülltes Loch. Die Durchkontaktierung 122 erstreckt sich von dem ersten Kontakt 106 auf der ersten Oberfläche 102 zu einer zweiten Oberfläche 124 des Substrats 100. Auf dieser zweiten Oberfläche 124 ist eine weitere elektrische leitfähige Schicht 126 gebildet, die die untere Oberfläche 124 des Substrats 100 im Wesentlichen vollständig bedeckt und die über die Durchkontaktierung 122 mit dem ersten Kontakt 106 des Sensorbauelements in Kontakt ist.

Obwohl die in Fig. 3 gezeigte Lösung die oben angesprochene Problematik betreffend die Befestigung der Anschlussdrähte gut löst (z.B. wenn die Anschlussdrähte gelötet werden), indem größere Flächen bereitgestellt werden, hat sich herausgestellt, dass insbesondere beim Anschweißen der Anschlussdrähte eine sehr hohe thermische Belastung auftritt, welche bei der vorliegenden Anordnung trotz der "größeren Flächen" zu Problemen führen kann, z.B. Risse in der darunter liegenden Glasurschicht.

Es wurde festgestellt, dass bei der Befestigung der Anschlussdrähte, z.B. mittels Widerstandsschweißen, auf der oberen Kontaktfläche 120 eine Beeinträchtigung der darunter liegenden Glasurschicht 118 auftreten kann, welche durch die "thermische Stosswelle" hervorgerufen wird. Durch den Schweiß-Impuls wird eine plötzliche Wärmewelle erzeugt, die sich über die Kontaktfläche (Metall) nach unten ausbreitet und sich in Sekundenbruchteilen als kurzer Wärmepuls auf die darunter liegende Isolierschicht (Glasur) fortsetzt. Durch diesen plötzlichen Wärmepuls, welcher auch innerhalb einer Ebene nicht isotrop ist, sondern im mittleren Bereich stärker und nach außen hin geringer ist, wird die Glasurschicht plötzlich und ungleichmäßig erhitzt, wodurch sich thermische Spannungen aufbauen, welche zu Rissen in der Glasur-Schicht führen können.

In ungünstigen Fällen kann dadurch auch die unter der Glasurschicht liegende Platin-Mäander-Bahn beschädigt werden, wodurch eine Unterbrechung der Widerstandsbahn und damit ein Ausfall des Sensors erfolgen könnte.

Ausgehend von diesem Stand der Technik liegt der vorliegenden Erfindung die Aufgabe zugrunde, ein verbessertes Verfahren zum Herstellen eines Temperaturmesssensors mit gegenüberliegenden Anschlussflächen sowie einen solchen Temperaturmesssensor zu schaffen, bei dem eine verbesserte Qualität der Anschlussverbindungen erreicht wird, ohne dass Änderungen im Aufbau des eigentlichen Sensor-Chips gemäß Fig. 3 erforderlich sind, gleichzeitig aber das Risiko einer Schädigung der Glasur oder einer anders gearteten Schutz- bzw. Isolationsschicht minimiert wird.

Diese Aufgabe wird durch ein Verfahren nach Anspruch 1 sowie durch einen Temperaturmesssensor nach Anspruch 13 gelöst.

Die vorliegende Erfindung schafft ein Verfahren zum Herstellen eines Temperaturmesssensors, mit folgenden Schritten: Bereitstellen des Temperaturmesssensors, der ein isolierendes Substrat mit einer oberen und einer unteren Oberfläche umfasst, wobei die obere Oberfläche einen ersten Bereich und einen zweiten Bereich aufweist und wobei in dem ersten Bereich ein erster Kontakt und ein zweiter Kontakt gebildet ist, zwischen denen ein strukturierter Messfilm angeordnet ist; Erzeugen einer leitfähigen Verbindung zwischen dem ersten Kontakt auf der oberen Oberfläche des isolierenden Substrats und der unteren Oberfläche des Keramiksubstrats; Erzeugen einer ersten leitfähigen Schicht als erste Anschlussfläche des Temperaturmesssensors auf der unteren Oberfläche derart, dass die erste leitfähige Schicht mit der leitfähigen Verbindung in Kontakt ist; und Erzeugen einer zweiten leitfähigen Schicht auf dem zweiten Bereich der oberen Oberfläche als zweite Anschlussfläche des Temperaturmesssensors derart, dass die zweite leitfähige Schicht mit dem zweiten Kontakt in Kontakt ist.

Die vorliegende Erfindung schafft ferner einen Temperaturmesssensor mit: einem isolierenden Substrat mit einer oberen und einer unteren Oberfläche, wobei die obere Oberfläche einen ersten Bereich und einen zweiten Bereich aufweist und wobei in dem ersten Bereich ein erster Kontakt und ein zweiter Kontakt gebildet ist, zwischen denen ein strukturierter Messfilm angeordnet ist; einer leitfähigen Verbindung zwischen dem ersten Kontakt auf der oberen Oberfläche des isolierenden Substrats und der unteren Oberfläche des Keramiksubstrats; einer ersten leitfähigen Schicht als Anschlussfläche des Temperaturmesssensors auf der unteren Oberfläche, die derart angeordnet ist, dass die erste leitfähige Schicht mit der leitfähigen Verbindung in Kontakt ist; und einer zweiten leitfähigen Schicht, die auf dem zweiten Bereich der oberen Oberfläche als zweite Anschlussfläche des Temperaturmesssensors, die derart angeordnet ist, dass die zweite leitfähige Schicht mit dem zweiten Kontakt in Kontakt ist.

Ein Vorteil der vorliegenden Erfindung besteht darin, dass die oben beschrieben Probleme betreffend die Beeinträchtigung einer Glasurschicht und/oder einer Widerstandsschicht durch den Befestigungsprozess der Drähte erfindungsgemäß deutlich vermindert wird, wenn der Kontaktbereich wie in Fig. 1A bzw. Fig. 1B erweitert bzw. so verändert wird, dass unter dem metallisierten Schweißbereich keine Widerstandsbahnen liegen.

Alternativ kann die leitfähige Verbindung durch eine leitfähige Schicht gebildet werden, die sich von dem ersten Kontaktbereich über eine Seitenfläche des Bauteils auf die zweite Oberfläche erstreckt.

Ein weiterer Vorteil der Erfindung liegt darin, dass gegenüber dem herkömmlichen Stand der Technik eine bessere mechanische Festigkeit erreicht werden kann, wobei erfindungsgemäße Temperaturmesssensoren gegenüber der beispielsweise in Fig. 3 beschriebenen alternativen Lösung kostengünstiger hergestellt werden können.

Gemäß einem weiteren Ausführungsbeispiel der vorliegenden Erfindung werden Zuleitungen, z.B. in der Form von Anschlussdrähten, mit den zwei Anschlussflächen verbunden, und optional kann eine weitergehende Umhüllung des Bauteils mit den daran befestigten Anschlussdrähten vorgesehen werden, wobei die Anschlussdrähte im Fall einer Hochtemperaturanwendung angeschweißt werden und die Umhüllung eine Glasur ist. Bei Anwendung in einem niedrigeren Temperaturbereich können die Anschlussdrähte auch angelötet werden und die Umhüllung durch ein Harz gebildet werden.

Bevorzugte Weiterbildungen der vorliegenden Erfindung sind in den Unteransprüchen definiert.

Nachfolgend werden bevorzugte Ausführungsbeispiele der vorliegenden Erfindung näher anhand der beiliegenden Zeichnungen erläutert. Es zeigen:
- Fig. 1A: eine Draufsicht eines bevorzugten Ausführungsbeispiels eines erfindungsgemäßen Temperaturmesssensors;
- Fig. 1B: einen Querschnitt eines bevorzugten Ausführungsbeispiels eines erfindungsgemäßen Temperaturmesssensors entlang des Schnitts A-A aus Fig. 1A;
- Fig. 2: ein herkömmlicher Temperaturmesssensor gemäß dem Stand der Technik;

- Fig. 3: eine Weiterentwicklung des herkömmlichen Temperaturmesssensors gemäß dem Stand der Technik;

Im Rahmen der nachfolgenden Beschreibung der bevorzugten Ausführungsbeispiele der vorliegenden Erfindung wird darauf hingewiesen, dass in den verschiedenen Zeichnungen gleiche oder gleichwirkende Elemente mit gleichen Bezugszeichen versehen sind.

Ausgehend von einem bekannten Sensor-Chip in OCD-Schichttechnik (OCD = Opposed Contact Device), wie er beispielsweise für Temperatursensoren, Heizelemente und Ähnliches verwendet wird, und wie er näher anhand der Fig. 3 beschrieben wurde, werden gemäß der vorliegenden Erfindung die nachfolgend näher erläuterten Modifizierungen vorgenommen. Aus Wirtschaftlichkeitsgründen wird hier als Ausgangspunkt ein Substrat oder Wafer verwendet, welches eine Vielzahl von Einzelsensoren aufweist. Neben den in der nachfolgenden Beschreibung verwendeten Beispielen eines Platin-Temperatur-Sensorelements können auch andere auf Metallfilmen basierende Sensoren, wie z.B. Nickel, Molybdän, Wolfram oder andere Temperaturmesssensoren mit einer ähnlichen Konfiguration betreffend die Anordnung der Kontakte 106 und 108 auf einer gemeinsamen Oberfläche 102 verwendet werden. Ferner sei an dieser Stelle darauf hingewiesen, dass die vorliegende Erfindung nicht auf solche Temperaturmesssensoren beschränkt ist, bei denen die elektrische Schaltung in Form eines speziell strukturierten Metallfilms gebildet ist. Vielmehr kann die elektrische Schaltung 110 auch durch in dem Substrat 100 gebildete Temperaturmesssensoren gebildet sein, bei denen lediglich die Kontakte 106 und 108 an die Oberfläche 102 herausgeführt sind.

Fig. 1 zeigt ein bevorzugtes Ausführungsbeispiel des erfindungsgemäßen Temperaturmesssensors, wobei hier die aus Fig. 2 und 3 bekannten Elemente mit den gleichen Bezugszeichen versehen sind.

Fig. 1A zeigt eine Draufsicht des bevorzugten Ausführungsbeispiels und Fig. 1B einen Schnitt entlang der Schnittkante A-A gemäß Fig. 1A. Die Figuren 1A und 1B zeigen einen Temperaturmesssensor mit einem isolierenden Substrat 100, einer oberen Oberfläche 102 und einer unteren Oberfläche 124, wobei die obere Oberfläche 102 einen ersten Bereich B1 und einen zweiten Bereich B2 aufweist. Auf dem ersten Bereich B1 ist ein erster Kontakt 106, 112 angeordnet, der sich aus einem ersten Kontaktbereich 106 und einer Kontaktverstärkung 112 zusammensetzt, ein zweiter Kontakt 108', 114' angeordnet, der sich aus einem zweiten Kontaktbereich 108'und einer zweiten Kontaktverstärkung 114' zusammensetzt, und ein strukturierter Messfilm 110' angeordnet, der zwischen dem ersten Kontakt 106, 112 und dem zweiten Kontakt 108', 114' angeordnet ist und mit diesen elektrisch verbunden ist. Der erste Bereich B1 kann daher auch als aktiver Bereich bezeichnet werden. Die Figuren 1A und 1B zeigen ferner eine leitfähige Verbindung 122 zwischen dem ersten Kontakt 106, 112 in dem ersten Bereich B1 der oberen Fläche des isolierenden Substrats 100 und der unteren Oberfläche 124 des isolierenden Substrats 100, wobei die leitfähige Verbindung 122 hier als Durchkontaktierung 122 ausgebildet ist. Eine erste leitfähige Schicht 126' ist als erste Anschlussfläche des Temperaturmesssensors auf der unteren Oberfläche 124 derart ausgebildet, dass die erste leitfähige Schicht 126' durch eine weitere leitfähige Verbindung 123 mit der leitfähigen Verbindung 122 in Kontakt ist.

Auf dem zweiten Bereich B2 der oberen Oberfläche 102 des isolierenden Substrats 100, der die bezogen auf den ersten Bereich B1 restliche Oberfläche der oberen Oberfläche 102 umfasst, ist eine zweite leitfähige Schicht 120' als zweite Anschlussfläche des Temperaturmesssensors angeordnet, wobei die zweite leitfähige Schicht 120' an der Stelle des zweiten Kontakts 108', 114' in den ersten Bereich B1 hineinreicht bzw. über eine leitfähige Verbindung 121 mit dem zweiten Kontakt 108', 114' verbunden ist, um eine gute elektrische Verbindung zwischen der zweiten leitfähigen Schicht 120' und dem zweiten Kontakt 108', 114' zu gewährleisten. Der zweite Bereich B2 kann daher auch als Anschlussbereich bezeichnet werden. Die Glasurschicht 116' bedeckt den aktiven Bereich bzw. ersten Bereich B1 bis auf den zweiten Kontakt 108', 114'. Die Glasurschicht 116' bzw. der Bereich, den die Glasurschicht 116' abdeckt, ist in Fig. 1A gestrichelt gekennzeichnet.

Obwohl Fig. 1A einen Temperaturmesssensor zeigt, bei dem der zweite Kontakt 108', 114' benachbart zum zweiten Bereich B2 angeordnet ist, kann der zweite Kontakt 108', 114' auch an einer anderen, weiter entfernten Stelle auf der oberen Oberfläche angeordnet sein, z.B. benachbart zum ersten Kontakt 106, 112, und die leitfähige Verbindung 121 beispielsweise als Leiterbahn ausgeführt sein. Desgleichen kann auch der erste Kontakt 106, 112 benachbart zu dem Kontakt 108', 114' und neben dem zweiten Bereich B2 liegen.

Im Gegensatz zum Stand der Technik gemäß Fig. 3 ist die zweite Anschlussfläche 120' nicht über der Glasurschicht 116' angeordnet, so dass bei dem Anbringen der Anschlussdrähte durch Löten oder Schweißen das Risiko einer Beschädigung der Glasurschicht 116' minimiert wird. Gleichzeitig wird durch das Verlegen der ersten Anschlussfläche 126' auf die untere Oberfläche 124 gegenüber dem Stand der Technik gemäß Fig. 2 erreicht, dass bei einem gleich großen aktiven Bereich, ein größerer Anschlussbereich bzw. zweiter Bereich B2 für eine mechanisch festere Verbindung von beispielsweise Anschlussdrähten zur Verfügung steht bzw. bei gleicher mechanischer Festigkeit von Anschlussverbindungen ein größerer aktiver Bereich bzw. erster Bereich B1 möglich ist.

Alternativ sind auch andere Aufteilungen der oberen Oberfläche 102 in einen ersten Bereich B1 und einen zweiten Bereich B2 möglich, so dass zum Beispiel der zweite Bereich B2 sich nicht über eine gesamte Breite B des isolierenden Substrats erstreckt, sondern nur beispielsweise bis zu einer halben Breite. Die optimale Form der zweiten Anschlussfläche 120' ist abhängig davon, ob beispielsweise ein Anschlussdraht in Längsrichtung L des isolierenden Substrats oder in Richtung der Breite B angebracht werden soll bzw. welche mechanische Festigkeit die Verbindung unter Berücksichtigung der Materialien der zweiten Anschlussfläche 120' und des Anschlussdrahtes und des entsprechenden Verfahrens haben soll.

Das isolierende Substrat 100 kann beispielsweise Al₂O₃-Keramik sein, und der Messfilm 110' beispielsweise eine Platin-Sensorstruktur sein, wobei die Anschlussflächen 120' und 126' beispielsweise aus Gold bestehen bzw. als Gold-Dickschicht ausgebildet sind. Es sei jedoch darauf hingewiesen, dass auch andere geeignete Metallisierungen (z.B. Platin, Silber, Nickel, etc. oder Kombinationen derselben, z.B. Platin und Gold) oder geeignete Legierungen (z.B. AgPd) eingesetzt werden können.

In den Figuren 1A und 1B ist die erste Anschlussfläche 126' nur in einem Bereich der unteren Oberfläche 124 ausgebildet, der dem zweiten Bereich B2 der oberen Oberfläche 102 bzw. der Anschlussfläche 120' entspricht. Alternativ kann die erste Anschlussfläche 126' natürlich auch eine andere Form als die zweite Anschlussfläche 120' annehmen, beispielsweise auch die gesamte untere Oberfläche 124 im Wesentlichen vollständig bedecken, so dass sie direkt mit der leitfähigen Verbindung 122 verbunden ist, und so keine weitere leitfähige Verbindung 123 benötigt wird. Des Weiteren können die erste leitfähige Schicht 126' und die zweite leitfähige Schicht 120' derart angeordnet sein, dass sie sich bzgl. ihrer Form und/oder Anordnung auf den jeweiligen Oberflächen 102, 124, also in Richtung der Länge L und/oder der Breite B, ganz oder teilweise überlappen oder auch überhaupt nicht überlappen.

Bei dem in den Figuren 1A und 1B dargestellten Ausführungsbeispielen wird an den Sensor-Chip, welcher auf der oberen Oberfläche 102 die Kontakte 106, 112 und 108', 114' aufweist an dem Kontakt 106, 112 ein kleines Loch durch das Substrat 100 für die Durchkontaktierung 122 zur Rückseite 124 erzeugt. Vorzugsweise wird dies in einem Prozess-Schritt für alle Sensoren eines Wafers durchgeführt. Optional kann der Prozess auch bereits am "nackten" Substrat durchgeführt werden, also bevor mit den anderen Prozess-Schritten zur Sensorherstellung (z.B. Metallfilmabscheidung etc.) begonnen wird, indem an den Stellen im Subrat, an denen später der Kontakt 106, 112 des Chips erzeugt werden soll, entsprechende Bohrungen eingebracht werden, beispielsweise durch Laserbearbeitung oder Stanzen oder Ähnlichem.

In einem weiteren Prozess-Schritt wird dann dieses Loch zur Durchkontaktierung 122, z.B. indem mittels des Siebdruckverfahrens eine Metallpaste aufgebracht wird, was gleichzeitig zu den Kontaktzonenverstärkungen 112, 114 führt, ein Teil der Fläche oder die gesamte Fläche der unteren Oberfläche 124 metallisiert, um die erste elektrische leitfähige Schicht 126 und gegebenenfalls im gleichen Schritt bzw. in einem separaten Schritt die weitere leitfähige Verbindung 123 zu erzeugen, wobei neben der Siebdrucktechnik auch andere Beschichtungstechniken (z.B. Bedampfen, Sputtern, chemische Beschichtung bzw. Kombination dieser Verfahren) angewendet werden können. Zur Metallisierung können sämtliche geeigneten Metalle bzw. Metallpasten verwendet werden, wobei hier lediglich beispielhaft Ag, Au, Pt, Ni, Cu, W etc. sowie deren Legierungen genannt seien. Ferner können Schichtkombinationen aus den genannten Materialien verwendet werden. In einem nächsten Schritt wird die Glasurschicht 116 über dem aktiven Bereich mit Ausnahme der Kontaktfläche 108' aufgebracht, um den strukturierten Messfilm 110' und den ersten Kontakt 106, 112 zu isolieren und zu schützen. Dabei kann die Glasur 116 auch eine Glaskeramikschicht, Keramikschicht oder eine Kombination dieser Materialien sein.

In einem weiteren Schritt wird der gesamte zweite Bereich B2 der oberen Oberfläche 102 oder zumindest ein wesentlicher Teil desselben (sowie der zweiten Kontaktfläche 108') mit der Metallisierungsschicht bzw. zweiten leitfähigen Schicht 120' versehen, wobei diese Metallisierungsschicht 120 insbesondere auch die Kontaktzonen 108', 114', die keine Durchkontaktierungen zur Substratrückseite 124 aufweisen, bedeckt und elektrisch verbindet. Hierdurch ergibt sich eine leitfähige Schicht mit einer größeren Abmessung als die Kontakte, so dass Anschlussdrähte mit erhöhter Zuverlässigkeit befestigt werden können. Gemäß einem bevorzugten Ausführungsbeispiel der vorliegenden Erfindung findet die oben anhand der Figuren 1A und 1B beschriebene Herstellung der Temperaturmesssensoren auf Waferebene statt, d.h., auf einem Wafer befinden sich bereits eine Mehrzahl von vorzugsweise baugleichen Bauteilen, die eine bestimmte Abmessung voneinander aufweisen. Um die prozessierten Temperaturmesssensoren, wie sie sich nach den Schritten gemäß Figuren 1A und 1B ergeben, in Einzel-Temperaturmesssensoren teilen zu können, sind bei einer Anordnung auf einem Wafer im Randbereich des Substrats 100 kleinere Flächenbereiche freigehalten, in denen Markierungen vorhanden sind, welche zum Vereinzeln des Wafers in Einzelbauteile herangezogen werden. Die oben beschriebene Metallisierung 120' kann vorzugsweise wieder durch einen Dickschichtprozess aufgebracht werden, jedoch können auch die anderen, oben genannten Verfahren herangezogen werden. Alternativ kann für eine Durchkontaktierung 122 für eine Verbindung zur Rückseite bzw. unteren Oberfläche 124 eine Verbindung über eine Außenkante erfolgen, wobei dann das Loch für die Durchkontaktierung entfallen kann (seitliche, leitfähige Schicht, die sich von dem ersten Kontakt 106, 112 über eine die Oberseite 102 und die Unterseite 124 des Substrats verbindende Seitenfläche zu der leitfähigen Schicht 126 auf der Unterseite erstreckt).

Für die Weiterverarbeitung kann der anhand der Figuren 1A und 1B beschriebene Temperaturmesssensor mit einer weiteren Metallisierungsschicht versehen werden. Beispielsweise kann eine erste weitere Metallisierungsschicht auf der ersten leitfähigen Schicht 126' und eine zweite weitere Metallisierungsschicht auf der zweiten leitfähigen Schicht 120' angeordnet werden. Diese weiteren Metallisierungsschichten sind beispielsweise Lötzinnschichten für das Anlöten von Anschlussdrähten oder dünne Goldschichten, die als Schweißhilfe dienen, um so die Sensor-Chips mit Anschlussdrähten, Kabeln oder Ähnlichem verbinden zu können. Abhängig von den Anwendungsfällen werden die Drähte bei höheren Einsatztemperaturen angeschweißt und bei niedrigeren Anwendungstemperaturen an die Verbindung der Anschlussdrähte mit dem Temperaturmesssensor angelötet.

Zusätzlich kann der Temperaturmesssensor und die Anschlussdrähte im Bereich deren Befestigung an demselben mit einer Umhüllung versehen sein. Für Anwendungsfälle bei höheren Einsatztemperaturen wird als Umhüllung eine Glasur oder ein geeignetes keramische Material verwendet, was eine mechanische Verfestigung herbeiführt sowie zusätzlichen chemischen Schutz bietet. Für niedrige Anwendungstemperaturen kann eine eventuell vorgesehene Umhüllung aus einem Polymermaterial, z.B. Epoxydharz, bestehen. Ferner können auch Schichtkombinationen der genannten Materialien für die Umhüllung verwendet werden.

Die oben beschriebenen Temperaturmesssensoren werden vorzugsweise auf Waferebene gefertigt, so dass das Bereitstellen des Bauteils das Bereitstellen eines Wafers mit einer Mehrzahl der Bauteile umfasst. Die oben genannten Schichten werden dann auf Waferebene erzeugt, wobei die Temperaturmesssensoren zum Abschluss vereinzelt werden.

Obwohl oben bevorzugte Ausführungsbeispiele beschrieben wurden, die die Kontakte an gegenüberliegenden Positionen des ersten Bereichs B1 zeigen, ist darauf hinzuweisen, dass die vorliegende Erfindung nicht auf diese Ausgestaltung beschränkt ist, sondern dass die Kontakte an beliebigen Positionen in dem ersten Bereich B1 auf der ersten Oberfläche 102 angeordnet sein können, z.B. auch nebeneinander.

Obwohl oben bevorzugte Ausführungsbeispiele beschrieben wurden, bei denen der erste Bereich B1 und der zweite Bereich B2 die obere Oberfläche vollständig oder im wesentlichen vollständig umfassen, kann das Substrat bzw. die obere Oberfläche 102 des isolierenden Substrats auch größer sein als die beiden vorgenannten Bereiche B1, B2.

Obwohl bevorzugte Ausführungsbeispiele betreffend den Herstellungsprozess beschrieben wurden, wird darauf hingewiesen, dass die vorliegende Erfindung nicht auf die angegebene Reihenfolge der Schritte in den angegebenen Ausführungsbeispielen beschränkt ist. Abhängig von den technischen Gegebenheiten können die jeweiligen Schritte auch in einer Reihenfolge ausgeführt werden, die sich von der beschriebenen unterscheidet. Insbesondere kann die zweite leitfähige Schicht vor der ersten leitfähigen Schicht gebildet werden. Ferner kann auch die Herstellung der leitfähigen Verbindung zwischen dem ersten Kontakt und der unteren Oberfläche vor oder nach dem Erzeugen der leitfähigen Schicht erfolgen.

## Patentansprüche

1. Verfahren zum Herstellen eines Temperaturmesssensors, mit folgenden Schritten:
Bereitstellen eines isolierenden Substrats (100) mit einer oberen (102) und einer unteren Oberfläche (124) umfasst, wobei die obere Oberfläche (102) einen ersten Bereich (B1) und einen zweiten Bereich (B2) aufweist, und wobei in dem ersten Bereich (B1) ein erster Kontakt (106, 112) und ein zweiter Kontakt (108', 114') gebildet ist, zwischen denen ein strukturierter Messfilm (110') auf der oberen Oberfläche (102) gebildet ist;
Erzeugen einer leitfähigen Verbindung (122) zwischen dem ersten Kontakt (106, 112) auf der oberen Oberfläche (102) des isolierenden Substrats (100) und der unteren Oberfläche (124) des isolierenden Substrats (100);
Erzeugen einer ersten leitfähigen Schicht (126') als erste Anschlussfläche des Temperaturmesssensors auf der unteren Oberfläche (124) derart, dass die erste leitfähige Schicht (126') mit der leitfähigen Verbindung (122) elektrisch verbunden (123) ist; und
Erzeugen einer zweiten leitfähigen Schicht (120') auf dem zweiten Bereich (B2) der oberen Oberfläche (102) als zweite Anschlussfläche des Temperaturmesssensors derart, dass die zweite leitfähige Schicht (120') mit dem zweiten Kontakt (108', 114') in Kontakt ist.

2. Verfahren nach Anspruch 1, bei dem die zweite leitfähige Schicht (120') ausschließlich auf dem zweiten Bereich (B1) der oberen Oberfläche (102) angeordnet wird und über eine leitfähige Verbindung (121) auf der oberen Oberfläche (102) mit dem zweiten Kontakt (108', 114') verbunden ist.

3. Verfahren nach Anspruch 1 oder 2, bei dem der zweite Kontakt (108', 114') benachbart zu dem zweiten Bereich (B2) angeordnet ist.

4. Verfahren nach einem der Ansprüche 1 bis 3, bei dem der Schritt des Bereitstellens das Erzeugen einer Durchkontaktierung (122) in dem Temperaturmesssensor umfasst, die sich von dem ersten Kontakt (106, 112) durch den Temperaturmesssensor zu der unteren Oberfläche (124) desselben erstreckt.

5. Verfahren nach einem der Ansprüche 1 bis 4, bei dem der Schritt des Bereitstellens das Erzeugen einer Glasurschicht (116') auf dem ersten Bereich (B1) der,oberen Oberfläche (102) umfasst, die über dem ersten Kontakt (106, 112) und dem strukturierten Messfilm (110') angeordnet ist.

6. Verfahren nach einem der Ansprüche 1 bis 5, bei dem sich die erste leitfähige Schicht (126') und die zweite leitfähige Schicht (120') bezüglich ihrer Anordnung auf den jeweiligen Oberflächen (102, 124) ganz oder teilweise überlappen.

7. Verfahren nach einem der Ansprüche 1 bis 6, bei dem der Schritt des Erzeugens einer ersten leitfähigen Schicht (126') das Erzeugen einer leitfähigen Schicht (126') umfasst, die nur in einem Bereich der unteren Oberfläche (124) angeordnet ist, der dem zweiten Bereich (B2) der oberen Oberfläche (102) gegenüberliegt.

8. Verfahren nach einem der Ansprüche 1 bis 5, bei dem sich die erste leitfähige Schicht (126') und die zweite leitfähige Schicht (120') bezüglich ihrer Anordnung auf den jeweiligen Oberflächen (102, 124) nicht überlappen.

9. Verfahren nach einem der Ansprüche 1 bis 8, mit folgendem Schritt:
Verbinden eines ersten Anschlussdrahtes mit der ersten Anschlussfläche (126') und eines zweiten Anschlussdrahtes mit der zweiten Anschlussfläche (120').

10. Verfahren nach Anspruch 9, mit folgendem Schritt:
Erzeugen einer Umhüllung, die den Temperaturmesssensor und die Anschlussdrähte im Bereich der Verbindung mit den Anschlussflächen (120', 126') umgibt.

11. Verfahren nach Anspruch 10, bei dem die Anschlussdrähte angeschweißt oder angelötet werden und die Umhüllung eine Glasur, ein keramisches Material, ein Polymermaterial oder eine Schichtkombination mehrerer derselben ist.

12. Verfahren nach einem der Ansprüche 1 bis 11, bei dem der Schritt des Bereitstellens das Bereitstellen eines Wafers mit einer Mehrzahl der Temperaturmesssensoren umfasst, wobei das Verfahren ferner das Vereinzeln der Temperaturmesssensoren umfasst.

13. Temperaturmesssensor mit:
einem isolierenden Substrat (100) mit einer oberen (102) und einer unteren Oberfläche (124), wobei die obere Oberfläche (102) einen ersten Bereich (B1) und einen zweiten Bereich (B2)aufweist, und wobei in dem ersten Bereich (B1) ein erster Kontakt (106,112) und ein zweiter Kontakt (108', 114') gebildet ist, zwischen denen ein strukturierter Messfilm (110') auf der oberen Oberfläche (102) gebildet ist;
einer leitfähigen Verbindung (122) zwischen dem ersten Kontakt (106, 112) auf der oberen Oberfläche (102) des isolierenden Substrats(100) und der unteren Oberfläche (124) des isolierenden Substrats (100);
einer ersten leitfähigen Schicht (126') als erste Anschlussfläche des Temperaturmesssensors auf der unteren Oberfläche (124), die derart ausgebildet ist, dass die erste leitfähige Schicht (126') mit der leitfähigen Verbindung (122) elektrisch verbunden (123) ist; und
einer zweiten leitfähigen Schicht (120) auf dem zweiten Bereich (B2) der oberen Oberfläche (102) als zweite Anschlussfläche des Temperaturmesssensors, die derart ausgebildet ist, dass die zweite leitfähige Schicht (120') mit dem zweiten Kontakt (108', 114') in Kontakt ist.

## Claims

1. A method of producing a temperature measuring sensor, comprising:
providing an insulating substrate (100) having a top surface (102) and a bottom surface (124), the top surface (102) comprising a first area (B1) and a second area (B2), and a first contact (106, 112) and a second contact (108', 114') being formed in the first area (B1), said contacts having a structured measuring film (110') located therebetween;
creating a conductive connection (122) between the first contact (106, 112) on the top surface (102) of the insulating substrate (100) and the bottom surface (124) of the insulating substrate (100);
creating a first conductive layer (126') as a first terminal area of the temperature measuring sensor on the bottom surface (124) such that the first conductive layer (126') is electrically connected (123) to the conductive connection (122); and
creating a second conductive layer (120') on the second area (B2) of the top surface (102) as a second terminal area of the temperature measuring sensor such that the second conductive layer (120') is in contact with the second contact (108', 114').

2. The method as claimed in claim 1, wherein the second conductive layer (120') is located exclusively on the second area (B1) of the top surface (102) and is connected to the second contact (108', 114') via a conductive connection (121) on the top surface (102).

3. The method as claimed in claims 1 or 2, wherein the second contact (108', 114') is located adjacently to the second area (B2).

4. The method as claimed in any of claims 1 to 3, wherein the step of providing comprises creating a via (122), within the temperature measuring sensor, which extends from the first contact (106, 112) through the temperature measuring sensor to the bottom surface (124) of same.

5. The method as claimed in any of claims 1 to 4, wherein the step of providing comprises creating a glaze coating (116') on the first area (B1) of the top surface (102), the glaze coating being located over the first contact (106, 112) and the structured measuring film (110').

6. The method as claimed in any of claims 1 to 5, wherein the first conductive layer (126') and the second conductive layer (120') fully or partly overlap with regard to their arrangements on the respective surfaces (102, 124).

7. The method as claimed in any of claims 1 to 6, wherein the step of creating a first conductive layer (126') comprises creating a conductive layer (126') which is arranged only in an area of the bottom surface (124) which is opposite the second area (B2) of the top surface (102).

8. The method as claimed in any of claims 1 to 5, wherein the first conductive layer (126') and the second conductive layer (120') do not overlap with regard to their arrangements on the respective surfaces (102, 124).

9. The method as claimed in any of claims 1 to 8, comprising:
connecting a first lead wire to the first terminal area (126'), and a second lead wire to the second terminal area (120').

10. The method as claimed in claim 9, comprising:
creating a sheathing which surrounds the temperature measuring sensor and the lead wires in the areas of the connection to the terminal areas (120', 126').

11. The method as claimed in claim 10, wherein the lead wires are welded on or soldered on and wherein the sheathing is a glaze, a ceramic material, a polymer material or a layer combination of several of these.

12. The method as claimed in any of claims 1 to 11, wherein the step of providing comprises providing a wafer having a plurality of the temperature measuring sensors, the method further comprising dicing the temperature measuring sensors.

13. A temperature measuring sensor comprising:
an insulating substrate (100) having a top surface (102) and a bottom surface (124), the top surface (102) comprising a first area (B1) and a second area (B2), and a first contact (106, 112) and a second contact (108', 114') being formed in the first area (B1), said contacts having a structured measuring film (110') located therebetween;
a conductive connection (122) between the first contact (106, 112) on the top surface (102) of the insulating substrate (100) and the bottom surface (124) of the insulating substrate (100);
a first conductive layer (126') as a first terminal area of the temperature measuring sensor on the bottom surface (124), said conductive layer (126') being implemented such that the first conductive layer (126') is electrically connected (123) to the conductive connection (122); and
a second conductive layer (120') on the second area (B2) of the top surface (102) as a second terminal area of the temperature measuring sensor, said conductive layer (120') being implemented such that the second conductive layer (120') is in contact with the second contact (108', 114').

## Revendications

1. Procédé de fabrication d'un capteur de mesure de température, aux étapes suivantes consistant à:
préparer un substrat isolant (100) avec une surface supérieure (102) et une surface inférieure (124), la surface supérieure (102) présentant une première zone (B1) et une deuxième zone (B2), et dans la première zone (B1) étant réalisés un premier contact (106, 112) et un deuxième contact (108', 114') entre lesquels est formé un film de mesure structuré (110') sur la surface supérieure (102);
générer une connexion conductrice (122) entre le premier contact (106, 112) sur la surface supérieure (102) du substrat isolant (100) et la surface inférieure (124) du substrat isolant (100);
générer une première couche conductrice (126') comme première face de raccordement du capteur de mesure de température sur la surface inférieure (124), de sorte que la première couche conductrice (126') soit reliée électriquement (123) à la connexion conductrice (122); et
générer une deuxième couche conductrice (120') sur la deuxième zone (B2) de la surface supérieure (102) comme deuxième face de raccordement du capteur de mesure de température, de sorte que la deuxième couche conductrice (120') soit en contact avec le deuxième contact (108', 114').

2. Procédé selon la revendication 1, dans lequel la deuxième couche conductrice (120') soit disposée exclusivement sur la deuxième zone (B1) de la surface supérieure (102) et soit reliée, par l'intermédiaire d'une connexion conductrice (121) sur la surface supérieure (102), au deuxième contact (108', 114').

3. Procédé selon la revendication 1 ou 2, dans lequel le deuxième contact (108', 114') est disposé adjacent à la deuxième zone (B2).

4. Procédé selon l'une des revendications 1 à 3, dans lequel l'étape de préparation comprend la génération d'une connexion transversale (122) dans le capteur de mesure de température qui s'étend du premier contact (106, 112), à travers le capteur de mesure de température, à la surface inférieure (124) de ce dernier.

5. Procédé selon l'une des revendications 1 à 4, dans lequel l'étape de préparation comprend la génération d'une couche d'émail (116') sur la première zone (B1) de la surface supérieure (102) qui est disposée sur le premier contact (106, 112) et le film de mesure structuré (110').

6. Procédé selon l'une des revendications 1 à 5, dans lequel la première couche conductrice (126') et la deuxième couche conductrice (120') se recouvrent, en tout ou en partie, en ce qui concerne leur disposition sur les surfaces respectives (102, 124).

7. Procédé selon l'une des revendications 1 à 6, dans lequel l'étape de génération d'une première couche conductrice (126'} comprend la génération d'une couche conductrice (126') qui n'est disposée que dans une zone de la surface inférieure (124) qui est opposée à la deuxième zone (B2) de la surface supérieure (102).

8. Procédé selon l'une des revendications 1 à 5, dans lequel la première couche conductrice (126') et la deuxième couche conductrice (120') ne se recouvrent pas en ce qui concerne leur disposition sur les surfaces respectives (102, 124).

9. Procédé selon l'une des revendications 1 à 8, avec l'étape suivante consistant à:
relier un premier fil de raccordement à la première face de raccordement (126') et un deuxième fil de raccordement à la deuxième face de raccordement (120').

10. Procédé selon la revendication 9, avec l'étape suivante consistant à:
générer une enveloppe qui entoure le capteur de mesure de température et les fils de raccordement à l'endroit de la connexion avec les faces de raccordement (120', 126').

11. Procédé selon la revendication 10, dans lequel les fils de raccordement sont raccordés par soudure ou brasure et l'enveloppe est un émail, un matériau céramique, un matériau polymère ou une combinaison de couches de plusieurs de ces derniers.

12. Procédé selon l'une des revendications 1 à 11, dans lequel l'étape de préparation comprend la préparation d'une plaquette avec une pluralité de capteurs de mesure de température, le procédé comprenant, par ailleurs, la séparation des capteurs de mesure de température.

13. Capteur de mesure de température, avec:
un substrat isolant (100) avec une surface supérieure (102) et une surface inférieure (124), la surface supérieure (102) présentant une première zone (B1) et une deuxième (B2), et dans la première zone (B1) étant formés un premier contact (106, 112) et un deuxième contact (108', 114') entre lesquels est formé un film de mesure structuré (110') sur la surface supérieure (102);
une connexion conductrice (122) entre le premier contact (106, 112) sur la surface supérieure (102) du substrat isolant (100) et la surface inférieure (124) du substrat isolant (100);
une première couche conductrice (126') comme première face de raccordement du capteur de mesure de température sur la surface inférieure (124) qui est réalisée de sorte que la première couche conductrice (126') soit reliée électriquement (123) à la connexion conductrice (122); et
une deuxième couche conductrice (120') sur la deuxième zone (B2) de la surface supérieure (102) comme deuxième face de raccordement du capteur de mesure de température qui est réalisée de sorte que la deuxième couche conductrice (120') soit en contact avec le deuxième contact (108', 114').
